# EUROPEAN PATENT SPECIFICATION

(11) **EP 3 210 509 B1**
(45) Date of publication and mention of the grant of the patent: **21.11.2018**
(21) Application number: 17158259.6
(22) Date of filing: 27.02.2017
(51) Int. Cl.: A47J 37/06, A47J 37/07

(54) **GRID FOR COOKING FOOD AND RELATED PRODUCTION METHOD**
GITTER ZUM KOCHEN VON LEBENSMITTELN UND ZUGEHÖRIGES HERSTELLUNGSVERFAHREN
GRILLE POUR LA CUISSON D'ALIMENTS ET PROCÉDÉ DE PRODUCTION ASSOCIÉ

(30) Priority: 25.02.2016 IT UB20161060
(43) Date of publication of application: 30.08.2017
(73) Proprietor: SMEG S.p.A., 42016 Guastalla, RE (IT)
(72) Inventor: TAGA, Bujar, 42016 Guastalla (IT)
(74) Representative: Eccetto, Mauro

(56) References cited:
- DE-A1- 4 244 629
- US-A- 2 884 849
- US-A- 5 347 978

## Description

The present invention relates to a grid for cooking food.

In particular, the present invention relates to a grid for a barbecue.

When cooking food on the grid, this latter must be arranged over a combustible heat source and the food is heated through conduction of the heat transmitted directly between the grid and the food and by convection as the grid allows hot air and combustion fumes to pass through the openings of the grid and come into contact with the food.

When cooking fatty food on the grid, the fat dissolves and trickles under the grid. In this case, the fat can come into direct contact with the heat source, for example embers, and catch fire, producing flames that come into contact with the food. It is evident that it is necessary to avoid or, at least, reduce direct contact of the food with the flames, as it would be burned and irreparably compromised.

In the case in which the grid equips a gas barbecue, besides the risk of generating flames that damage the food, the fat that trickles through the grid also soils the barbecue and requires to be cleaned.

The patent application WO 2008/12558 discloses a grid assembly formed by two superimposed grids, wherein a lower grid has channels for conveying the fat and openings that separate adjacent channels and the upper grid and roof tile shaped elements, which are separated by further openings and are arranged so as to guide the fat into the channels. In other words, the lower grid and the upper grid are superimposed in such a manner that the respective slits are not aligned with respect to a vertical direction, so that the fat that trickles from the first grid is collected by the second grid.

This technical solution is undoubtedly efficient, but also costly as it requires the use of two grids instead of one.

Document US 5,347,978 discloses a grid, which is cast in one piece and comprises grill rods overlapping slits and partially drain channels.

Document US 2,884,849 discloses a grid made by corrugated metal sheet and including adjacent walls and slits protected by wings bent with respect to said walls.

An aim of the present invention is to produce a grid that can achieve effective and safe cooking of food and that is also economical.

In accordance with the present invention, there is produced a grid for cooking food, in particular for equipping a barbecue, the grid comprising a corrugated plate, which has an upper face configured to be arranged in contact with the food and a lower face configured to face a heat source; a plurality of channels parallel to one another and configured to convey liquids, wherein each channel is separated from an adjacent channel by an upper rim and being formed by a first and a second wall connected to each other at the bottom of the channel; a plurality of slits parallel to said channels, each slit extending along the first wall close to the adjacent upper rim; and a plurality of wings of the second walls, each wing being arranged over a respective slit to protect the slit, wherein each first wall and each respective wing are inclined with respect to a vertical direction; the first wall being inclined by an angle and the wing by a second angle greater than the first angle and each second wall is inclined by a third angle greater than the first angle with respect to a vertical direction, in particular the third angle is equal to the second angle so that the wing has the same inclination as the second wall to which it is attached.

In this way, the trickling of material, in particular liquids, through the slits is prevented, or at least reduced, by the wing.

The first and the second wall are substantially flat. This form allows the grid to be produced by bending.

In particular, each wing extends parallel to the related channel and has the same length as the respective slit.

In this way, a constant protection is ensured along the channel.

A further object of the present invention is to provide a simple and rapid method for producing a grid that overcomes the problems of the prior art.

In accordance with the present invention, there is provided a method for producing a grid for cooking food, the method comprising the step of making C-shaped cuts along a flat blank and bending the blank around first bend lines to define the bottom of the channels and around second bend lines to define the upper rim of the channels; each second bend line intersecting at least a respective cut in two points.

When the bend around the second bend lines is implemented, the wings detach from the walls and form the slits.

Further features and advantages of the present invention will be apparent from the description below of a non-limiting example of embodiment, with reference to the figures of the accompanying drawings, wherein:
- Fig. 1 is a schematic side view, with parts in section and parts removed for clarity, of a barbecue comprising a grid for cooking food produced in accordance with the present invention;
- Fig. 2 is a sectional view, with parts removed for clarity and in a further enlarged scale, of a detail of Fig. 1 along the section lines II-II;
- Fig. 3 is a sectional view, with parts removed for clarity and in a further enlarged scale, of a detail of Fig. 1 along the section lines III-III; and
- Fig. 4 is a plan view, in an enlarged scale and with parts removed for clarity,

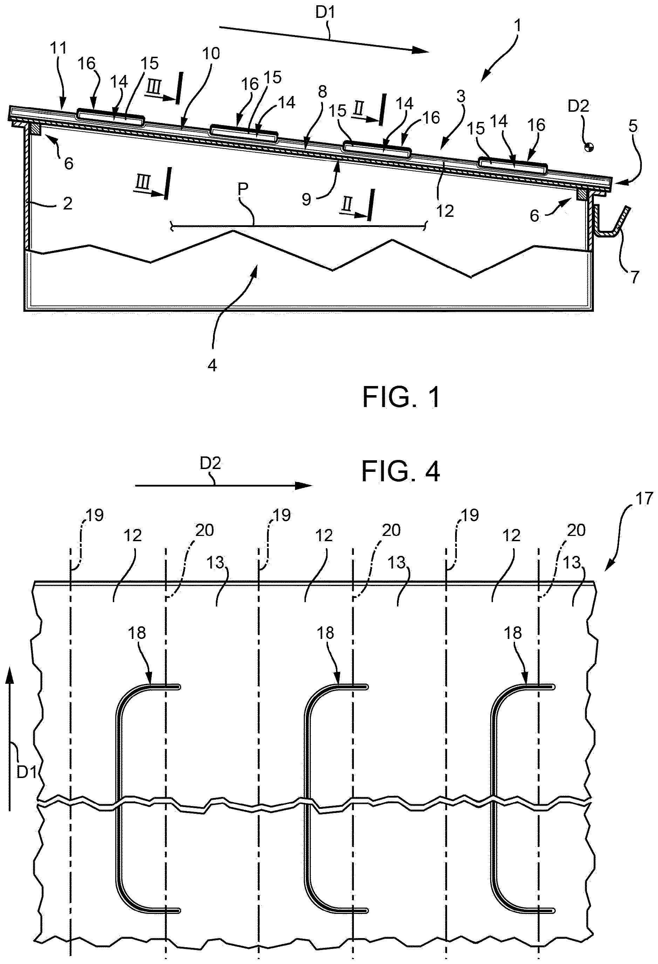

Fig. 1 denotes with the reference numeral 1 a barbecue comprising a box-shaped body 2; a grid 3 resting on the box-shaped body 2; and a combustion chamber 4, which is delimited by the box-shaped body 2 and by the grid 3 and in which there is housed a heat source typically defined by embers or by one or more gas burners.

The grid 3 is supported by the box-shaped body 2 so as to be slightly inclined, in use, with respect to a horizontal plane P. The grid 3 comprises a panel 5; and at least one support 6, which is fixed to the lower part of the panel 5 and extends in a direction D2 perpendicular to the direction D1. In the case shown, the grid 3 comprises two supports 6, which are arranged at the opposite ends of the grid 3 and have the function of positioning the grid 3 correctly with respect to the box-shaped body 2. In particular, each support 6 is defined by a section bar or by a rod that extends substantially for the whole width of the grid 3 so as to stiffen the corrugated panel 5. The barbecue 1 comprises a collecting portion 7 to receive liquids from the grid 3 and convey them to a lateral container, not shown in the appended figures. The grid 3 is in fact inclined for the collecting portion 7 so as to collect the liquids produced during cooking and pour them into the collecting portion 7.

In particular, the preferred material for producing the grid 3 is stainless steel: the panel 5 and the elongated supports 6 are connected to one another by welding or other joining means, for example riveting.

Each panel 5 has an upper face 8 configured to be arranged in contact with the food and a lower face 9 configured to face the combustion chamber 4 with a heat source.

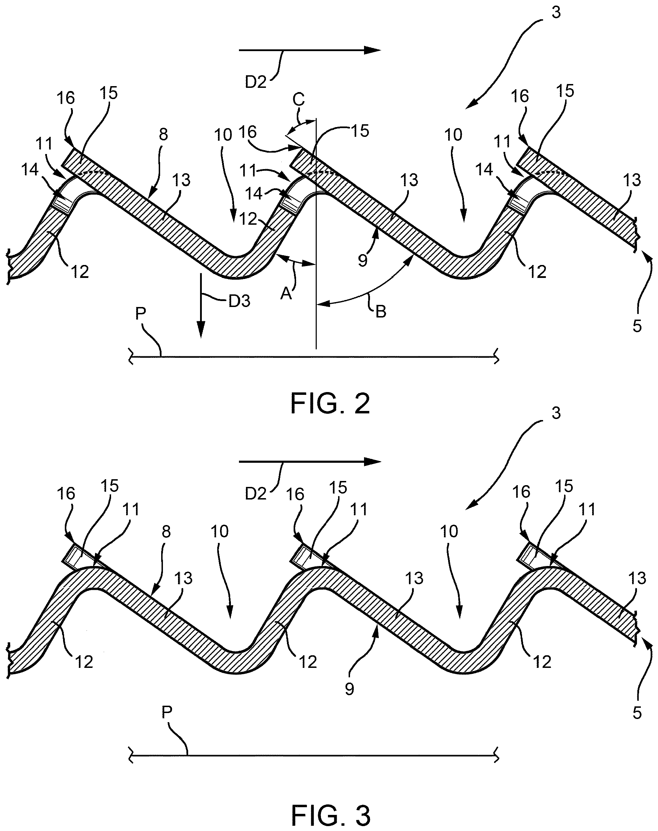

With reference to Figs. 2 and 3, the panel 5 has a plurality of channels 10 parallel to one another and to the direction D1. The channels 10 are configured to convey liquid, in this case fat dissolved by the heat, towards the collecting portion 7 (Fig. 1).

In the case shown, each channel 10 is separated from an adjacent channel 10 by an upper rim 11 and is delimited by a wall 12 and a wall 13, joined to each other at the bottom of the channel 10.

With reference to Fig. 2, the panel 5 has a plurality of slits 14 parallel to the channels 10 and to the direction D1. Each slit 14 extends along the wall 12 close to the adjacent upper rim 11; and a plurality of wings 15 integral with respective walls 13. Each wing 15 is arranged over a respective slit 14 so as to protect the slit 14 from falling material, in particular when in liquid state. In practice, the projection of the wing 15 along the horizontal plane P substantially contains the projection of the slit 14 along the horizontal plane P and, therefore, any material falling by gravity in vertical direction D3 is mantained inside the channels 10.

In the case shown, the walls 12 and 13 are substantially flat. In particular, the walls 12 and 13 of each channel 10 converge towards the bottom of the channel 10 and are joined to each other at the bottom of the channel 10.

Both walls 12 and 13 are inclined with respect to a vertical direction. The wall 12 is inclined by an angle A smaller than the inclination of the wall 13, which is inclined by an angle B. In particular, the wall 12 is inclined by an angle A between 25° and 35°, while the wall 13 is inclined by an angle B between 50° and 60°.

In this particular case, each wing 15 is coplanar to a respective wall 13 and therefore has an inclination greater than the wall 12 in which the slit 14 below is obtained. In practice, each wing 15 is the extension of a respective wall 13 and has the same inclination as the wall 13 to which it is attached. Consequently, at a respective slit 14 the upper rim 11 is defined by the respective wing 15.

Each wing 15 has an upper edge 16 formed by the upper face of the wing 15 and the thickness of the wing 15. In particular, the upper edge 11 at a respective slit 14 is defined by the upper edge 16 of the respective wing 15.

Each wing 15 extends at a respective slit 14 and has the same length as the respective slit 14.

Each slit 14 has a length smaller than the length of the grid 3 so that the channels 10 are connected to one another as shown in Fig. 3.

In particular, three slits 14, aligned with one another and spaced from one another, extend along each channel 10. In this way, the channels 10 are connected to one another along four sections that give structural solidity to the grid 3.

With reference to Fig. 3, in the sections without slits 14, the wall 12 and the wall 13 of two adjacent channels 10 converge towards the upper edge 11 which in the sections without slits 14 is formed by the curved connection of the walls 12 and 13 of two adjacent channels 10.

With reference to Figs. 2 and 3, the channels 10 are distributed in the direction D2 with a constant distribution pitch.

With reference to Fig. 2, the depth of each channel 10 with respect to the lower part of the slit 14 is greater than 4 mm.

With reference to Fig. 4, from a viewpoint of construction, the panel 5 is produced from a flat blank 17 in which there are made C-shaped cuts 10 defining the outer shape of each wing 15 and dashed lines 19 and 20, hereinafter referred to as bend lines. The bend lines 19 and 20 on the blank identify the walls 12 and 13.

Subsequently the blank 17 is bent around the bend lines 19 and 20 to produce the channels 10 and the walls 12 and 13 (Figs. 2 and 3). Each bend line 20 intersects a cut 18 in two points so that the bend around the bend line 20 takes the same inclination as the wall 13 to which it is attached. In this way, the wing 15 is raised with respect to an adjacent wall 12 and forms a respective slit 14 (Fig. 2).

Finally, it is evident that modifications and variants can be made to the grid described without departing from the scope of protection of the appended claims.

## Claims

1. A grid for cooking food, in particular for equipping a barbecue, the grid (3) comprising: a corrugated plate (5), which has an upper face (8) configured to be arranged in contact with the food and a lower face (9) configured to face a heat source; a plurality of channels (10) parallel to one another and configured to convey liquids, wherein each channel (10) is separated from an adjacent channel (10) by an upper rim (11) and is formed by a first and a second wall (12, 13) connected to each other at the bottom of the channel; a plurality of slits (14) parallel to said channels (10), each slit (14) extending along the first wall (12) close to the adjacent upper rim (11); and a plurality of wings (15) of the second walls (13), each wing (15) being arranged over a respective slit (14) to protect the slit (14), wherein each first wall (12) and each respective wing (15) are inclined with respect to a vertical direction (D3); the first wall (12) being inclined by an angle (A) and the wing (15) by a second angle (C) greater than the first angle (A) **characterized in that** each second wall (13) is inclined by a third angle (B) greater than the first angle (A) with respect to a vertical direction (D3), in particular the third angle (B) is equal to the second angle (C) so that the wing (15) has the same inclination as the second wall (13) to which it is attached.

2. The grid as claimed in claim 1, wherein the first and the second wall (12, 13) are substantially flat.

3. The grid as claimed in any one of the preceding claims, wherein each wing (15) extends parallel to the related channel (10) and has the same length as the respective slit (14).

4. The grid as claimed in any one of the preceding claims, wherein at a slit (14) the upper rim (11) is defined by the respective wing (15).

5. The grid as claimed in any one of the preceding claims, wherein each wing (15) has an upper edge (16) formed by the upper face of the wing (15) and the thickness of the wing (15), the upper edge (11) at a slit (14) being defined by the upper edge (16) of the respective wing (15).

6. The grid as claimed in any one of the preceding claims, wherein each slit (14) has a length smaller than the length of the grid (3).

7. The grid as claimed in any one of the preceding claims, wherein along each channel (10) four slits (14), aligned with one another and spaced from one another, extend.

8. The grid as claimed in any one of the preceding claims, wherein the channels (10) are distributed transverse to the direction of extension of the same channels (10) with a constant distribution pitch.

9. The grid as claimed in any one of the preceding claims, wherein each first wall (12) has a width smaller than the width of each second wall (13) transverse to the direction of extension of the same channels (10).

10. The grid as claimed in any one of the preceding claims, wherein the depth of the channel (10) with respect to the lower part of the slit (14) is greater than 4 mm.

11. Method for producing a grid for cooking food as claimed in any one of the preceding claims, the method comprising the step of making C-shaped cuts (18) along a flat blank (18) and bending the blank around first bend lines (19) to define the bottom of the channels (19) and around second bend lines (20) to define the upper rim (11) of the channels (10); each second bend line (20) intersecting at least a respective cut (18) in two points.

## Patentansprüche

1. Gitter für das Garen von Nahrungsmitteln, insbesondere zur Ausstattung eines Grills, wobei das Gitter (3) umfasst: eine gewellte Platte (5), die eine obere Fläche (8) hat, die derart ausgestaltet ist, dass sie in Kontakt mit dem Nahrungsmittel angeordnet sein kann und eine untere Fläche (9), die derart ausgestaltet ist, dass sie zu einer Wärmequelle weist; mehrere Kanäle (10), die parallel zueinander verlaufen und derart ausgestaltet sind, dass sie Flüssigkeiten transportieren können, wobei jeder Kanal (10) von einem benachbarten Kanal (10) durch einen oberen Rand (11) getrennt ist und durch eine erste und eine zweite Wand (12, 13) ausgebildet ist, die miteinander am Boden des Kanals verbunden sind; mehrere Schlitze (14), parallel zu den Kanälen (10), wobei jeder Schlitz (14) entlang der ersten Wand (12) nahe dem angrenzenden oberen Rand (11) verläuft; und mehrere Auskragungen (15) der zweiten Wände (13), wobei jede Auskragung (15) über einem entsprechenden Schlitz (14) angeordnet ist, um den Schlitz (14) zu schützen, wobei jede erste Wand (12) und jede entsprechende Auskragung (15) in Bezug auf eine vertikale Richtung (D3) geneigt sind; die erste Wand (12) um einen Winkel (A) geneigt ist und die Auskragung (15) um einen zweiten Winkel (C), der größer ist als der erste Winkel (A), **dadurch gekennzeichnet, dass** jede zweite Wand (13) um einen dritten Winkel (B) geneigt ist, der größer ist als der erste Winkel (A) in Bezug auf eine vertikale Richtung (D3), wobei insbesondere der dritte Winkel (B) gleich dem zweiten Winkel (C) ist, sodass die Auskragung (15) die gleiche Neigung hat wie die zweite Wand (13), an der sie angebracht ist.

2. Gitter nach Anspruch 1, wobei die erste und die zweite Wand (12, 13) im Wesentlichen eben sind.

3. Gitter nach einem der vorstehenden Ansprüche, wobei jede Auskragung (15) parallel zu dem zugehörigen Kanal (10) verläuft und die gleiche Länge hat wie der jeweilige Schlitz (14).

4. Gitter nach einem der vorstehenden Ansprüche, wobei der obere Rand (11) an einem Schlitz (14) durch die jeweilige Auskragung (15) definiert ist.

5. Gitter nach einem der vorstehenden Ansprüche, wobei jede Auskragung (15) eine obere Kante (16) hat, die durch die obere Fläche der Auskragung (15) und die Dicke der Auskragung (15) gebildet ist, wobei der obere Rand (11) an einem Schlitz (14) definiert ist durch die obere Kante (16) der jeweiligen Auskragung (15).

6. Gitter nach einem der vorstehenden Ansprüche, wobei jeder Schlitz (14) eine Länge hat, die kleiner als die Länge des Gitters (3) ist.

7. Gitter nach einem der vorstehenden Ansprüche, wobei entlang jedes Kanals (10) vier Schlitze (14) verlaufen, die zueinander fluchten und voneinander beabstandet sind.

8. Gitter nach einem der vorstehenden Ansprüche, wobei die Kanäle (10) transversal zur Richtung der Erstreckung der gleichen Kanäle (10) verteilt sind mit einem konstanten Verteilungsmaß.

9. Gitter nach einem der vorstehenden Ansprüche, wobei jede erste Wand (12) eine Breite hat, die kleiner ist als die Breite jeder zweiten Wand (13), transversal zur Richtung der Erstreckung der gleichen Kanäle (10).

10. Gitter nach einem der vorstehenden Ansprüche, wobei die Tiefe des Kanals (10) in Bezug auf den unteren Teil des Schlitzes (14) größer als 4mm ist.

11. Verfahren zur Herstellung eines Gitters zum Garen von Nahrungsmitteln, wie es in einem der vorstehenden Ansprüche beansprucht ist, wobei das Verfahren den Schritt umfasst des Erstellens C-förmiger Einschnitte (18) entlang eines ebenen Rohlings (18) und Biegen des Rohlings um erste Biegelinien (19), um den Boden der Kanäle (19) zu definieren und um zweite Biegelinien (20), um den oberen Rand (11) der Kanäle (10) zu definieren, wobei jede zweite Biegelinie (20) einen jeweiligen Einschnitt (18) zumindest an zwei Stellen schneidet.

## Revendications

1. Grille pour cuire des aliments, en particulier pour équiper un barbecue, la grille (3) comprenant: une plaque ondulée (5), qui présente une face supérieure (8) configurée de manière à être agencée en contact avec l'aliment et une face inférieure (9) configurée de manière à faire face à une source de chaleur; une pluralité de canaux (10) parallèles les uns aux autres et configurés de manière à transporter des liquides, dans laquelle chaque canal (10) est séparé d'un canal adjacent (10) par un rebord supérieur (11) et est formé par une première et une seconde parois (12, 13) connectées l'une à l'autre à la base du canal; une pluralité de fentes (14) parallèles auxdits canaux (10), chaque fente (14) s'étendant le long de la première paroi (12) à proximité du rebord supérieur adjacent (11); et une pluralité d'ailettes (15) des seconde parois (13), chaque ailette (15) étant agencée au-dessus d'une fente respective (14) afin de protéger la fente (14), dans laquelle chaque première paroi (12) et chaque ailette respective (15) sont inclinées par rapport à une direction verticale (D3); la première paroi (12) étant inclinées d'un angle (A) et l'ailette (15) d'un deuxième angle (C) supérieur au premier angle (A), **caractérisé en ce que** chaque seconde paroi (13) est inclinée d'un troisième angle (B) supérieur au premier angle (A) par rapport à une direction verticale (D3), en particulier le troisième angle (B) est égal au deuxième angle (C) de telle sorte que l'ailette (15) présente la même inclinaison que la seconde paroi (13) à laquelle elle est attachée.

2. Grille selon la revendication 1, dans laquelle la première et la seconde parois (12, 13) sont sensiblement plates.

3. Grille selon l'une quelconque des revendications précédentes, dans laquelle chaque ailette (15) s'étend parallèlement au canal associé (10) et présente la même longueur que la fente respective (14).

4. Grille selon l'une quelconque des revendications précédentes, dans laquelle au niveau d'une fente (14) le rebord supérieur (11) est défini par l'ailette respective (15) .

5. Grille selon l'une quelconque des revendications précédentes, dans laquelle chaque ailette (15) présente un bord supérieur (16) formé par la face supérieure de l'ailette (15) et l'épaisseur de l'ailette (15), le bord supérieur (11) au niveau d'une fente (14) étant défini par le bord supérieur (16) de l'ailette respective (15).

6. Grille selon l'une quelconque des revendications précédentes, dans laquelle chaque fente (14) présente une longueur inférieure à la longueur de la grille (3).

7. Grille selon l'une quelconque des revendications précédentes, dans laquelle quatre fentes (14), alignées les unes avec les autres et espacées les unes des autres, s'étendent le long de chaque canal (10).

8. Grille selon l'une quelconque des revendications précédentes, dans laquelle les canaux (10) sont distribués transversalement à la direction d'extension des mêmes canaux (10) avec un pas de distribution constant.

9. Grille selon l'une quelconque des revendications précédentes, dans laquelle chaque première paroi (12) présente une largeur inférieure à la largeur de chaque seconde paroi (13) transversalement à la direction d'extension des mêmes canaux (10).

10. Grille selon l'une quelconque des revendications précédentes, dans laquelle la profondeur du canal (10) par rapport à la partie inférieure de la fente (14) est supérieure à 4 mm.

11. Procédé de production d'une grille pour cuire des aliments selon l'une quelconque des revendications précédentes, le procédé comprenant l'étape consistant à pratiquer des découpes en forme de C (18) le long d'une ébauche plate (18) et à plier l'ébauche autour de premières lignes de pliage (19) afin de définir la base des canaux (19) et autour de secondes lignes de pliage (20) afin de définir le rebord supérieur (11) des canaux (10); chaque seconde ligne de pliage (20) coupant au moins une découpe respective (18) en deux points.
